## Europäisches Patentamt
### European Patent Office
### Office européen des brevets

(11) Veröffentlichungsnummer: **0 236 690**
**A2**

(12) ## EUROPÄISCHE PATENTANMELDUNG

(21) Anmeldenummer: **87100600.3**

(22) Anmeldetag: **19.01.87**

(51) Int. Cl.⁴: **H02K 15/02** , H02K 3/46

(30) Priorität: **10.03.86 HU 99286**

(43) Veröffentlichungstag der Anmeldung:
**16.09.87 Patentblatt 87/38**

(84) Benannte Vertragsstaaten:
**AT BE CH DE ES FR GB GR IT LI LU NL SE**

(71) Anmelder: **Ipari Müszergyár**
**Iklad Pf. 2**
**H-2170 Aszod(HU)**

(72) Erfinder: **Ivanics, László, Dipl.-Ing. El**
**Sallai l.u.21**
**HU Budapest XXI(HU)**
Erfinder: **Bognar, Sándor Dr. Dipl.-Ing. El**
**Folyóka u.24**
**HU Budapest III(HU)**
Erfinder: **Kiss, Gyula, Dipl.-Ing. Mech.**
**Kerepesi u. 78/B**
**Budapest XIV(HU)**

(74) Vertreter: **Patentanwälte Viering & Jentschura**
**Steinsdorfstrasse 6**
**D-8000 München 22(DE)**

(54) **Elektrische rotierende Maschine.**

(57) Elektrische rotierende Maschine, deren Ständer - (2) und Läufer (Innen-, Außen-oder Zwischenläufer) ohne Abfall hergestellt sind, indem der Eisenkern des Ständers (2) und des Läufers aus axialspiralig oder radialspiralig gewickeltem Eisenband oder aus massivem Eisen zahn-und nuten frei ausgebildet sind und das Wickelsystem (4) der Maschine in ein gegen den Luftspalt offenes oder geschlossenes Zahn-und Nutsystem (3/1) eingebettet ist, wobei das Letztere aus an einem Eisenband oder an einer Scheibe befestigten elastischen Nuthülsen und Hauptzähnen sowie aus dazwischengeschobenen Hilfszähnen besteht.

Fig. 11

EP 0 236 690 A2

## Elektrische rotierende Maschine

Gegenstand der Erfindung ist die Ausbildung des Ständers und des Läufers einer elektrischen rotierenden Maschine, sowie die Wicklungen derselben.

Es ist allgemein bekannt, daß der Eisenkern - (Körper) elektrischer rotierender Maschinen aus genau nebeneinandergepaßten Dynamoblechen gebaut wird. Bei der Fertigung des Eisenkörpers bildet sich ein bedeutender Abfall, der 50-60 % des gesamten Materials ausmacht.

Ein aus Blechen bestehender Läufer wird oft zwangsläufig in dieser Weise hergestellt (z.B. bei Asynchronmotoren). Wenn nämlich der Ständer aus Blechen besteht, fällt bei der Fertigung das Material des Läufers ab und wird der Läufer ebenfalls aus Blechen (Blechpaket) hergestellt.

Die Entwicklung der elektrischen rotierenden Maschinen blickt auf einen langen Weg zurück.

Bei dem herkömmlichen Aufbau werden der Ständer und der Läufer derart ausgebildet, daß die Ständer-und Läuferbleche aus einem Eisenband von 0,5 -0,7 mm Dicke geschnitten und dann zu einem Blechpaket vereint werden, derart, daß die Ränder der Bleche entlang der Richtung des magnetischen Flusses verlaufen.

Der Ständer ist ein Hohlzylinder, an dessen inneren Fläche -parallel zu der geometrischen Achse der Maschinenwelle -ein Zahn-und Nutsystem gebildet wird, an dem die mechanische Befestigung der Ständerwicklung erfolgt.

An dem Läufer sind ebenso Zahn-und Nutsysteme ausgearbeitet, in die die Läuferwicklungen eingebettet sind. (Es sei bereits hier erwähnt, daß bei den Synchron-und Asynchronmotoren diese Baumethode keine unerläßliche Bedingung ist).

Entsprechend der Lage des Läufers sind Motoren mit einem Innenläufer, mit einem Außenläufer und mit einem Zwischenläufer bekannt.

Bei den Motoren mit einem Innenläufer richtet sich der magnetische Fluß in dem Luftspalt senkrecht zu der geometrischen Achse der Maschine aus (radiale Richtung).

Bei den Motoren mit einem Zwischenläufer verläuft der magnetische Fluß in dem Luftspalt parallel zu der geometrischen Achse der Maschine (axiale Richtung).

Für die Fertigung des aus Blechen gebildeten Eisenkörpers sowie der Wicklung ist eine äußerst anspruchsvolle Ökonomie wünschenswert, wobei die Funktion und die Beibehaltung des Wirkungsgrades der Maschine in Betracht gezogen werden müssen.

Diese Gesichtspunkte sollten bei der Entwicklung verbesserter Motorenkonstruktionen berücksichtigt werden.

Aus der DE-A-2 849 583 ist eine Motorentwicklung bekannt, bei der der Eisenkörper des Ständers ohne Nuten gefertigt ist. Nach dieser Ausführungsform sind innerhalb des Ständerkernes in konzentrischen Lagen parallele Stangen gelegt, welche im Bereich des Maschinenstirnendes abgerundet sind. Sie sind zu gleicher Zeit in einem isolierenden Tragkörper eingebettet, der sich in der Bohrung des Ständerkernes befindet. Das Charakteristische dieser Ausführungsform liegt in der Anzahl der Stangen, in deren Lage und in der technischen Maßnahme, wie die Stangen an den Stirnenden abgerundet sind. Diese Motoren sind Spezialmotoren, z.B. Turbogeneratoren. Motorfamilien können infolge des Fertigungsaufwandes und der Konstruktion nicht entwickelt werden.

Ebenso bekannt ist es aus der DE-A-2 455 001, die Wicklung der Motoren ohne Nut zu fertigen, und zwer mit Hilfe von an der inneren Oberfläche des magnetischen Kerns angebrachten Wickelstangen. Die Wickelstangen sind verseilte, isolierte Kabel. Die Konstruktion ist dadurch gekennzeichnet, daß die benachbarten Wickelstangen gegenläufig verseilt sind. Zweck dieses Motoraufbaus ist es, die Abmessungen des Motors nicht zu vergrößern, weil sich dies auf die Leistung des Motors auswirken würde. Werden die Abmessungen vermindert, so weist der Luftspalt zwischen dem Ständer und dem Läuferkern eine erhöhte magnetische Induktion auf.

So tritt zwischen den benachbarten Zähnen - die die Hälfte der inneren Oberfläche des Ständerkernes ausmachen -ein größeres Magnetfeld und magnetische Sättigung auf. Die Konsequenz sind hohe Eisenverluste. Da bei jeder Wicklung an der gegenüber dem Zahn liegenden Seite die gesamte Spannung der Maschine herrscht, muß man die Isolierung verstärken. Damit erhält man aber eine schlechtere Ausnutzung der Wickelnuten und die Maschinenleistung wird ebenfalls geringer.

Bei größeren Leistungen wird die Kühlung der Maschine -z.B. durch Wasserstoff - erforderlich. Dazu braucht man aber einen hohen Strombelag und einen weiteren Luftspalt zwischen Ständer und Läufer, um ein im voraus bestimmtes Kurzschlußverhältnis -für die Spannungsschwankung und die Stabilität des Systems -schaffen zu können. Eine derartige elektrische Drehmaschine beamsprucht ein Kühlsystem. Anstatt der Nuten des Blechpakets sind Spezialkabel erforderlich.

Materialeinsparung ist der Zweck der Motorkonstruktion nach der DE-A-2 644 938. Die Zahn-und Nutsysteme werden hier derart ausgebildet, daß aus zwei übereinanderlaufenden Bändern koaxiale, wellenförmige Ringe gebildet werden, die gegenüber dem größeren Durchmesser offene Nuten aufweisen. In diese Nuten sind die Wicklungen eingelegt. Diese Konstruktion ist dadurch gekennzeichnet, daß die aus dem Rand gebildeten Wellen des Zahnsystems radiale Rippen bilden und diese eng und ohne Spiel aneinander anliegen. Dadurch wird die innere Walzenfläche des Blechpaketes ausgestaltet.

Eine separate Fertigung der das Blechpaket bildenden Bleche wird in der DE-A-2 217 824 vorgestellt.

Mit Voranschreiten der Technologie wurden die Ständerwicklungen in Kunststoff eingebettet. Dies geschieht derart, daß ein kontinuierlich aushärtender Kunststoff zu dem fertiggewickelten und in einer Form gedrehten Ständer geführt wird, und dann die Form zusammen mit dem Ständer mit einer solchen Winkelgeschwindigkeit gedreht wird, daß der Kunststoff den durch die Form bestimmten Ständer und den eingebetteten Stoff in radialer Richtung umgibt.

Das Verfahren ist dadurch gekennzeichnet, daß der Kunststoff so lange in eine an der Ständerform ausgearbeitete Bohrung eingeführt wird, bis der zurückbleibende Kunststoff in eine am Kopf der Form befindlichen ringförmigen Nut aufströmt.

Die Lösung nach der US-A-4 365 180 bezweckt die Verbesserung der Fertigung der Einzelbleche. Nach diesem Patent werden die entsprechenden Bauteile der elektrischen Maschine durch Falten eines im voraus gezahnten, hochkant stehenden Bandes hergestellt. Sowohl der Ständer wie auch der Rotor werden durch Wickeln nach dieser Art gefertigt. Zu diesem Zweck werden im voraus gezahnte, bogenförmige, an ihren Enden miteinander verbundene Bandsegmente derart gewählt, daß die Verbindung der in radialer Richtung aneinanderliegenden Segmente zwischen den festen Teilen des Materials sandwichartig ausgebildet wird. Der Nachteil hierbei besteht in der Anwendung von aufwendigen Einrichtungen zur Ausbildung der Zähne und der Wicklungen.

In der US-A-4 392 073 ist eine andere Motorkonstruktion beschrieben. Der Ständer des Motors ist aus zwei konzentrisch zueinander montierten Zylindern gebaut, derart, daß zumindest ein Zylinder durch das Wickeln eines amorfen Metallbandes angefertigt wird. Der andere zylinderförmige Teil ist ein ringförmig gewickeltes Band, dessen Windungen in Form eines Kegels geführt sind, derart, daß der oberste Durchmesser identisch zu dem Durchmesser der anderen Wicklung ist. Dadurch wird ermöglicht, daß eine schwache Reluktanzverbindung zwischen den einzelnen zylinderförmigen Teilen infolge der Nuten zustandekommt.

Aus den erwähnten Ausführungsformen wird eindeutig klar, daß eine Fertigung der Blechpakete ohne Abfall nur teilweise oder durch sonstige technischen Maßnahmen erreicht werden kann, zu der separate aufwendige Zielmaschinen erforderlich sind. Der Erfindung wurde daher die Aufgabe gestellt, eine elektrische rotierende Maschine zu konstruieren, aus der Motorfamilien entwickelt und hergestellt werden können, wobei der bei der herkömmlichen Technologie entstehende Abfall vermieden wird, der bisher durchschnittlich 50% des Gesamtmaterials ausmacht. Desweiteren soll eine neuartige Lösung der Befestigung der Wicklung erzielt werden.

Diese Aufgabe wird insbesondere durch die Konstruktion einer elektrischen rotierenden Maschine mit den folgenden Merkmalen einzeln oder in Kombination gelöst:

-der Ständer und der Läufer der elektrischen Maschine sind aus axialspiralig oder radialspiralig gewickeltem Eisenband oder aus massivem Eisen ohne Zähne (Zacken) und Nuten gefertigt, während das Wicklungssystem eine in Kunstharz eingebettete, entlang des Luftspalts gebildet Wicklung mit ausgegossenem oder freistehendem Wicklungskopf sein kann, der einen Befestigungsring aufweist;

-das Wicklungssystem ist mit Kunstharz ausgegossen und aus einem mit thermoplastischem Kunstharz umhüllten Draht ausgebildet, wobei der Wicklungskopf entweder freistehend oder mit Kunstharz vergossen und mit einem Befestigungsring versehen sein kann;

-das Zahn-und Nutsystem sind aus an einem Eisenband oder an einer Scheibe montierten elastischen Nuthülsen gebildet, in die die Wicklungen eingelegt sind; dadurch wird auch die Zahnkonstruktion befestigt und die Wicklungen liegen entweder an der Luftspaltseite oder an der Seite des Eisenkörpers;

-das Zahnsystem wird aus einem vorgefertigten Kunstharz-oder Ferritrohr oder Scheibe gebildet, an deren äußeren Fläche axiale oder radiale Nuten - schwalbenschwanzförmigen Querschnitts ausgearbeitet sind, in die die ebenso vorgefertigten, (eine beliebige Form aufweisenden, aus Blechen oder aus Ferrit bestehenden) Zähne eingeschoben sind, und die das die Wicklung aufnehmende System bilden;

-die Anfahr-und die Dämpferkäfige der ein-oder dreiphasigen, kurzgeschlossenen Wechselstrommaschinen (Synchron-oder Asynchronmotoren) bestehen aus einem geschlitzten Metallrohr oder aus einer geschlitzten Scheibe, während das Wicklungssystem entlang der Luftspalte ausgebildet, d.h. eine sog. "Tiefwicklung" ist.

Die Erfindung wird nachfolgend anhand der Zeichnung im einzelnen erläutert. In der Zeichnung zeigen:

Fig. 1a einen herkömmlichen, mit Schleifring versehenen Asynchronmotor

Fig. 1b einen Kurzschlußläufer,

Fig. 2 im Schnitt einen herkömmlichen Gleichstrommotor mit einem inneren Läufer,

Fig. 3 einen herkömmlichen, kurzgeschlossenen Asynchronmotor mit Zwischenläufer,

Fig. 4 einen herkömmlichen, kurzgeschlossenen Asynchronmotor mit einem äußeren Läufer,

Fig. 5a den Ständer eines erfindungsgemäßen Wechselstrommotors mit einem inneren Läufer, der aus axialspiralig, ohne Abfall gewickeltem Eisenband ohne Zähne und Nuten besteht,

Fig. 5b einen analogen Aufbau, wobei die Wicklungen in zwei Schichten gefertigt sind,

Fig. 6a-6b den Aufbau des Eisenkörpers des Ständers nach 5a-5b bei einem Wechselstrommotor mit einem äußeren Läufer,

Fig. 7a einen Gleichstrommotor mit einem inneren Läufer, der einen axialspiralig ohne Abfall gewickelten Polkranz aufweist,

Fig. 7b den Ständer eines Gleichstrommotors mit einem radialspiralig ohne Abfall gewickelten Ständer,

Fig. 8 einen Wechselstrommotor mit einem inneren Läufer, dessen Ständer aus einem axialspiralig gewickelten, im voraus genuteten Stahlband mit vermindertem Abfall angefertigt wurde,

Fig. 9 eine Variante des Ausführungsbeispiels nach Fig. 5a und 5b,

Fig. 10 eine Variante des Ausführungsbeispiels nach Fig. 8,

Fig. 11 die Ergänzung des Ständerblechpaketes nach Fig. 5 mit dem montierten Zahn-und Nutsystem,

Fig. 12 den Eisenkörper eines Wechsel-strommotors mit einem zwischengelegten, radial-spiralig gewickelten Läufer mit montiertem Zahn-und Nutsystem,

Fig. 13 einen Wechselstrom-oder Universalmotor mit zwischengelegtem, radialspiralig ohne Abfall gewickeltem Läufer bzw. Polkranz und die montierten Pole,

Fig. 14 einen Läufer großen Durchmessers oder den Ständer eines Motors mit äußerem Läufer, der axialspiralig gewickelt und mit Nuten versehen ist,

Fig. 15 die gleiche Konstruktion nach Fig. 14 dem Unterschied, daß der Eisenkörper in zwei Schichten gewickelt worden ist,

Fig. 16 den Ständer eines Gleichstrommotors mit einem äußeren Läufer und mit einem massiven, aus Eisen gefertigten Polkranz und mit aufmontierten Polschuhen,

Fig. 17 einen Ständer analog zur Fig. 16, mit dem Unterschied, daß der Polkranz axialspiralig gewickelt ist,

Fig. 18 einen massiven Läufer ohne Zahn- und Nutsysteme,

Fig. 19 den Eisenkörper eines Läufers ohne Zahn-und Nutsystem, der radialspiralig gewickelt ist,

Fig. 20 einen Eisenkörper großen Durchmessers ohne Zahn-und Nutsystem, der axialspiralig gewickelt ist,

Fig. 21a den Zwischenläufer mit einem radialspiralig gewickelten Eisenkörper ohne Zahn- und Nutsysteme,

Fig. 21b dasselbe wie Fig. 21a, mit dem Unterschied, daß der Eisenkörper nicht gewickelt, sondern massiv ist,

Fig. 22 den axialspiralig gewickelten äußeren Läufer ohne Zahn-und Nutsystem,

Fig. 22b denselben wie in Fig. 22 dargestellten Läufer, aber nicht gewickelt, sondern aus massivem Eisen angefertigt,

Fig. 23 einen Innenläufer, dessen Körper aus einem genuteten Eisenband axialspiralig gewickelt ist,

Fig. 24 denselben Läufer mit in zwei Schichten gewickeltem Eisenkörper

Fig. 25 einen Wechselstrommotor mit einem Innenläufer, wobei die Wickelköpfe am Ständer und am Läufer ausgegossen sind,

Fig. 26 einen Schnitt durch das Ständerwicklungssystem aus mit thermoplastischem Kunststoff umhülltem Draht entlang des Luftspaltes,

Fig. 27 einen Schnitt analog zur Fig. 26 mit dem Unterschied, daß die Wicklung aus normalem, emaillierten Draht besteht und in Kunstharz eingebettet ist,

Fig. 28a eine entlang des Luftspalts ausgebildete Ständerwicklung mit einem freistehenden Wickelkopf und Befestigungsring; der Läufer besteht aus massivem Eisen, der Käfig ist ein vorgefertigtes, perforiertes Rohr,

Fig. 28b ein Lösung, die zur Figur 28a analog ist; in den Ständer sind zwei Käfige eingebaut,

Fig. 29 einen Schnitt eines einen Zwischenläufer enthaltenden Motors mit entlang des Luftspalts gewickelten, Nuten ohne Zähne und einen vorgossenen Wicklungskopf aufweisenden Ständer, wobei ein Scheibenkäfig vorgesehen ist,

Fig. 30 einen Schnitt analog zur Fig. 29 mit dem Unterschied, daß ein Doppelscheibenkäfig vorgesehen ist,

Fig. 31 einen Asynchronmotor mit einem entlang des Luftspalts ausgebildeten Wicklungssystem, einem ausgegossenen Wickelkopf, einem Läufer aus massivem Eisen und mit einem Rohrkäfig,

Fig. 32a einen Asynchronmotor analog zur Fig.31, aber mit zwei Rohrkäfigen,

Fig. 32b die gleiche Konstruktion wie die aus Fig. 30, 31, wobei der Wickelkopf asymmetrisch ausgebildet ist,

Fig. 33 einen Teil des Wicklungssystems eines Motors mit einem Innenläufer,

Fig. 34a das vorgefertigte Zahn-und Nutsystem (abgewickelt) mit elastischer Nuthülse und Hauptzähnen,

Fig. 34b das Zahn-und Nutsystem in montiertem Zustande,

Fig. 35 den Ständer eines Motors mit Innenläufer bzw. ein montiertes Zahn-und Nutsystem eines Motors mit einem Außenläufer,

Fig. 36 die Kostruktion nach Fig. 35 mit dem Unterschied, daß die Montage entlang des Luftspalts durchgeführt ist,

Fig. 37 das Zahn-und Nutsystem des Ständers eines Motors mit Zwischenläufer in montiertem Zustande,

Fig. 38 eine vorgefertigte Rohrkonstruktion in montiertem Zustande, mit schwalbenschwanzförmigen Nuten für die Zähne, wobei die Zahnköpfe mittels eines Kunstharzkranzes befestigt sind, wobei gegen en Luftspalt keine Sperrschicht aus Kunstharz vorgesehen ist,

Fig. 39 dieselbe Lösung wie Fig. 38, jedoch gegen den Luftspalt mit einer Sperrschicht aus Kunstharz bedeckt,

Fig. 40a den massiven Läufer eines mit Innenläufer versehenen Asynchronmotors mit einem vorgefertigten, geschlitzten Rohrkäfig,

Fig. 40b einen Rohrkäfig, an dem die Schlitze axial ausgebildet sind,

Fig. 40c den Rohrkäfig mit schrägen Schlitzen,

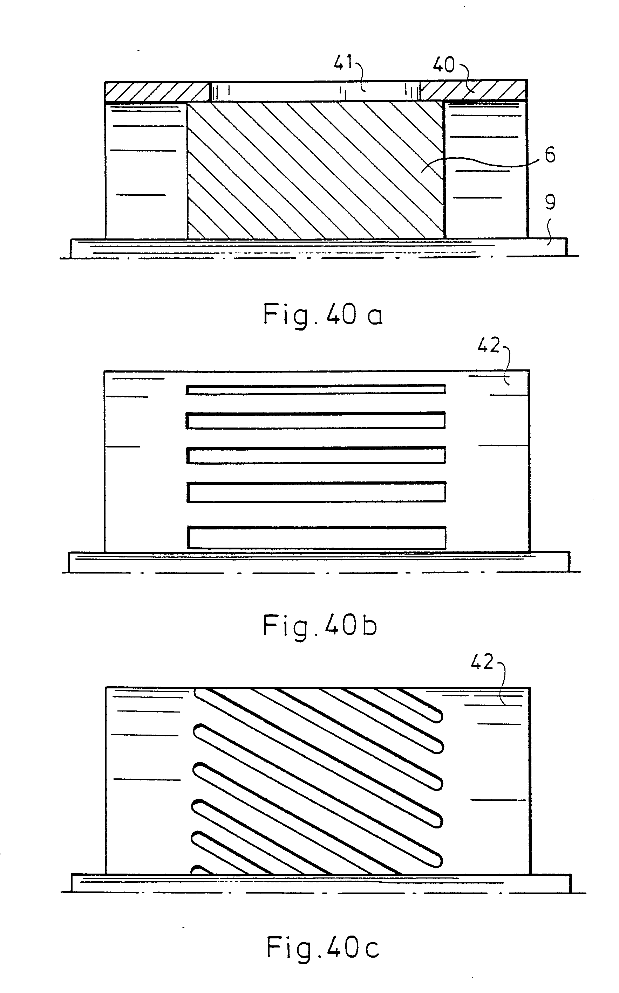

Fig. 40a des Käfigsystem aus einer geschlitzten Scheibe eines Motors mit einem Zwischenläufer ohne Schlitzschrägung, und

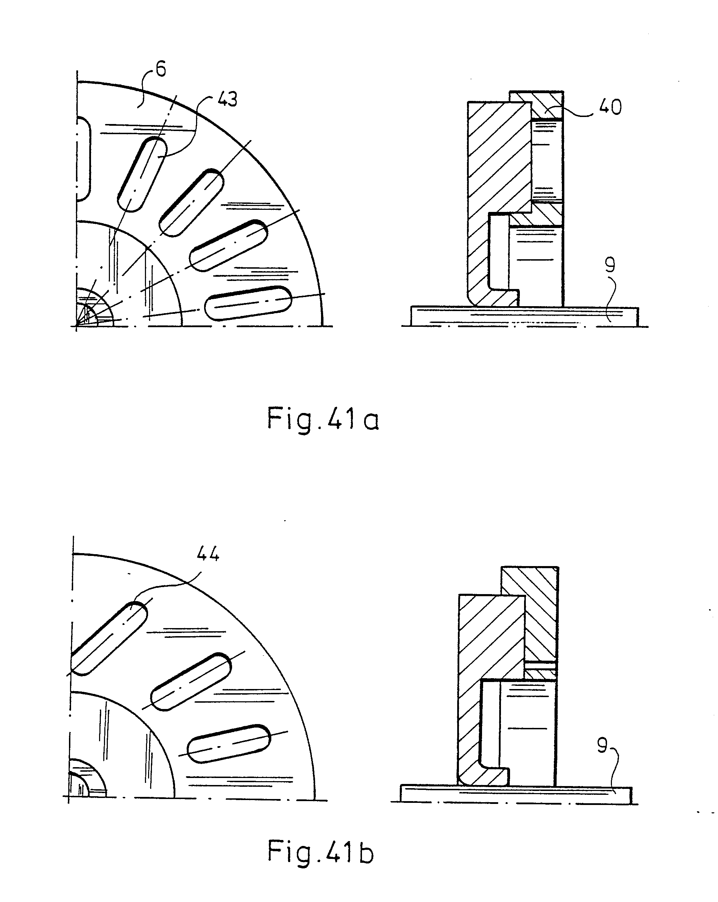

Fig. 41b die Lösung nach Fig. 41a mit - schrägstehenden Schlitzen.

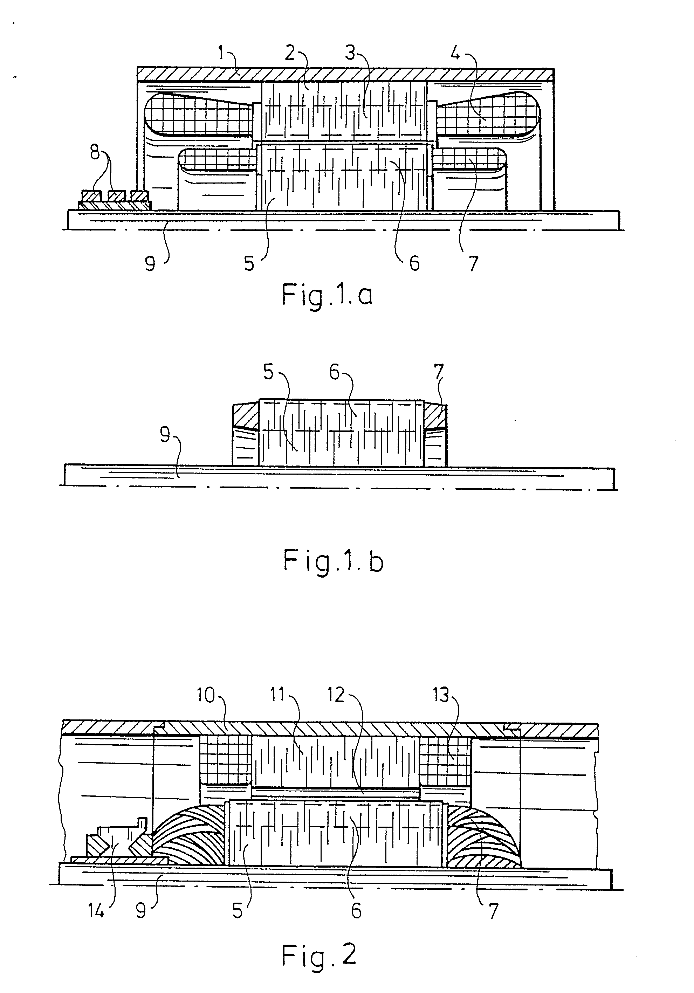

Die einzelnen geschilderten Ausführungsbeispiele nach Fig. 1-41b sind - schematisch dargestellt.

In den Fig. 1a-1b sind herkömmliche Wechselstrommotoren und in der Fig. 2 ein Gleichstrommotor dargestellt. Innerhalb des Gehäuses 1 ist der Eisen körper des Ständers 2 befestigt. Der Eisenkörper des Ständers 2 ist aus Dy namoblechen mit einer Dicke von 0,5 -0,7 mm hergestellt. Die Zähne, falls vorhanden, sind über Aussparungen (Nuten) voneinander getrennt zur Aufnahme der Wicklungen vorgesehen (Zacken).

Die durch Preßstanzen gefertigten Bleche werden aus Eisenringscheiben ausgebildet, die dann in axialer Richtung aneinandergereiht und zu einem Blechpaket zusammengepreßt werden. Somit bildet der Ständer 2 einen Hohlzylinder, entlang dessen inneren Oberfläche -parallel zu der geometrischen Achse der Maschine -das Zahn-und Nutsystem 3 des Ständers 2 ausgebildet ist, wodurch die mechanische Befestigung der Ständerwicklung 4 erreicht wird.

Der Läufer 5 ist ebenfalls aus Blechen hergestellt. Auf dem Blechkörper des Läufers 5 ist das Zahn-und Nutsystem 6 ausgebildet, das zur Aufnahme der Läuferwicklung 7 dient. Fig. 1b zeigt die gleiche Konstruktion mit einem Käfig und einem Kurzschlußring. Zu der Fig. 1a sieht man die Schleifringe 8 und die Motorwelle 9.

In der Fig. 2 wird der Aufbau eines Gleichstrommotors im Schnitt gezeigt. In dieser Konstruktion kann der außen angeordnete Polkranz 10 die Rolle des Gehäuses 1 spielen. In den Polkranz 10 ist der Polkörper 11 eingebracht, auf dem die Polschuhe 12 montiert sind. An dem Polkörper 11 ist die Polwicklung 13 angeordnet. In derselben Figur sieht man noch den Kommutator 14, der nicht nur bei Gleichstrommotoren, sondern auch bei Wechselstrommotoren eingebaut wird.

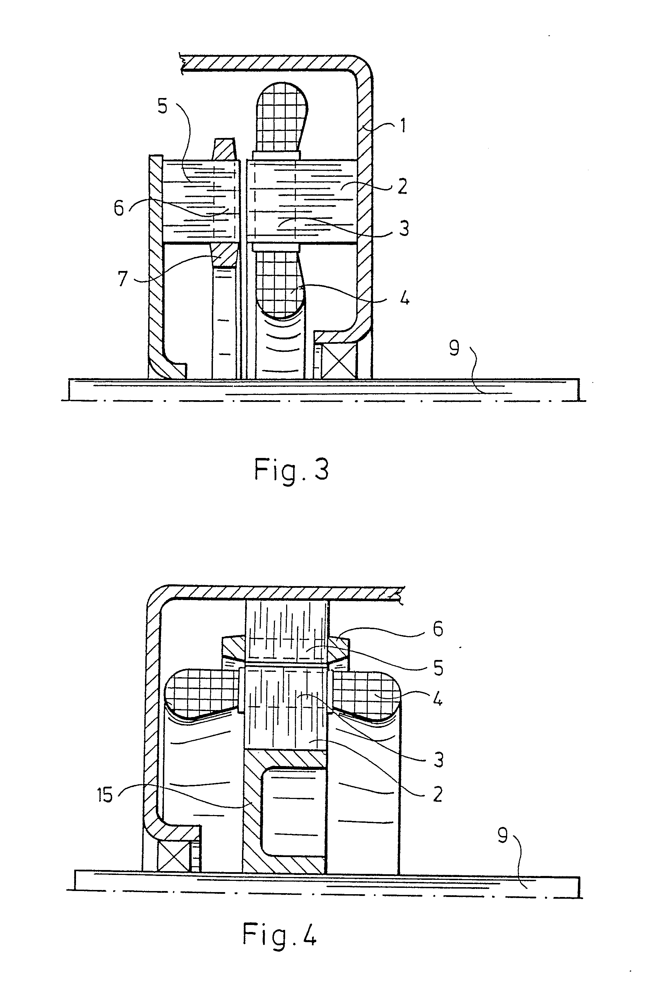

Anhand von Fig. 3 wird ein herkömmlicher Motor mit kurzgeschlosssenem Läufer 5 veranschaulicht. Der Läufer 5 und der Ständer 2 werden parallel zur Richtung des magnetischen Flusses, radialspiralig gewickelt.

Sowohl das Zahn-und Nutsystem 3 des Ständers 2 wie auch das des Läufers 5 werden bei der Fertigung mit Hilfe einer komplizierten, nutreißenden Maschine hergestellt.

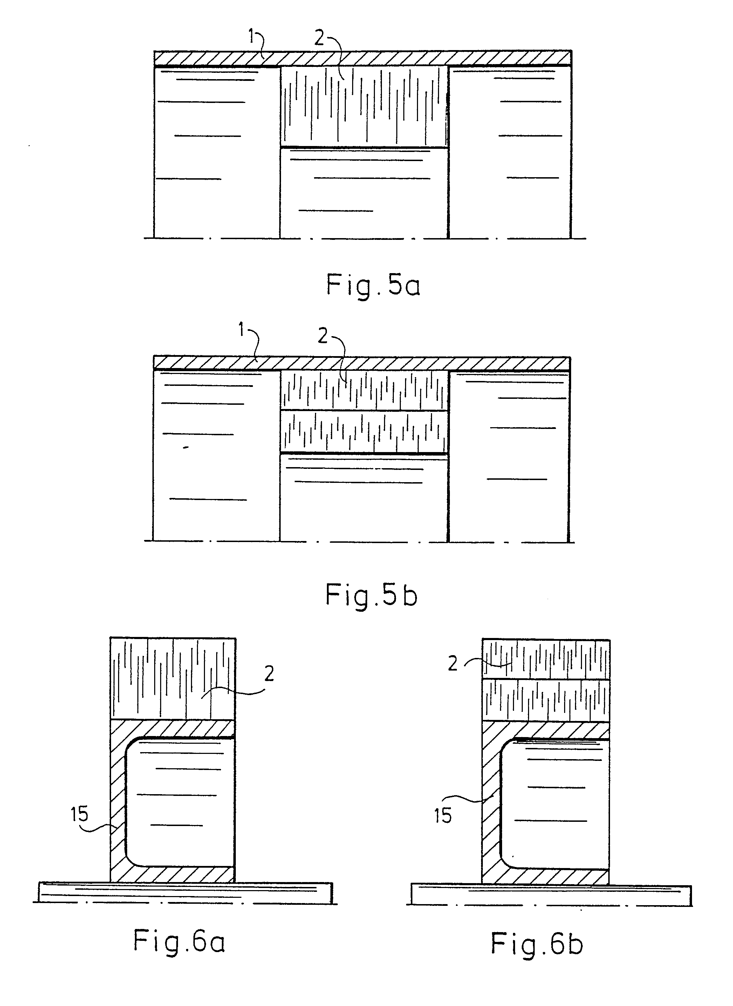

In der Fig. 4 sieht man einen herkömmlichen Motor mit einem sog. Außenläufer 5 im Schnitt. Auf der Welle 9 ist eine Nabe 15 befestigt, von der der Ständer-Eisenkörper 2 getragen wird. Die Fertigung der Bleche erfolgt wie bei herkömmlichen Motoren mit einem bedeutenden Abfall.(60-80 %)

Ein erfindungsgemäßen Motor mit einem Innenläufer wird ohne Zahn-und Nutsystem angefertigt. Eine solche Maschine ist in den Fig. 5a, 5b - schematisch dargestellt. Nach Fig. 5a wird der vorgefertigte axialspiralig gewickelte Ständer 3 in das Gehäuse 1 in einer Schicht, und nach Fig. 5b in zwei Schichten eingepreßt. Zur Fertigung wird ein Kaltgewalztes, 0,5 -0,8 mm dickes, 1000 mm breites Metallband verwendet.

Aus diesem Band werden 20 -30 mm breite Streifen abfallfrei geschnitten und diese werden auf einer Wickelmaschine mit einstellbarer Bremsung aufgewickelt. Dieses "Grundmaterial" wird dann durch Induktions-oder unmittelbare Widerstandsheizung wärmebehandelt und am Ende wird der Streifen hochkant stehend an einer Wickeltrommel regulierbarer Drehzahl befestigt. Das Heizsystem wärmt etwa 7/8 des Steifens derart auf, daß der wärmste Teil des Bandes der den äußeren Durchmesser bestimmende Rand wird.

Nachdem das Band auf einen Dorn bestimmten Durchmessers aufgewickelt ist, wird das Blechpaket noch im warmen Zustand etwas gelockert und endlich abgekühlt. Dieser Behandlung folgt die Dekarbonisierung und das Blauanlassen (d.h. die Ausbildung einer $Fe_3O_4$ Schicht).

Das gelockerte Blechpaket wird dann auf einen Dorn festgelegten Durchmessers aufgezogen und die Anfangs-und Endkanten werden verschweißt. Das Schweißen erfolgt auch entlang der äußeren Erzeugenden und -wenn nötig -wird es innen verschweißt, nach dem das Blechpaket zusammengepreßt wurde. Das so gebildete Blechpaket des Ständers 2 wird durch Pressen durch auf andere Weise in dem Gehäuse 1 befestigt. Wenn der Ständer 2 entsprechend Fig. 5b aus mehreren Schichten gefertigt wird, so wird zuerst der Innenkranz gewickelt. Nachdem er fertig ist, verbleibt er auf dem Dorn. Dort wird er durch Drehen außen bearbeitet, damit die zweite Schicht auf eine glatte Fläche gewickelt wird. Das Blechpaket verhält sich dabei wie eine Spiralfeder.

In den Fig. 6a und 6b sieht man Schnitt einen axialspiralig gewickelten Ständer 2 eines Motors mit einem Außenläufer, wobei der Ständer 2 auf die Nabe 15 in einer bzw. in zwei Schichten gewickelt wurde.

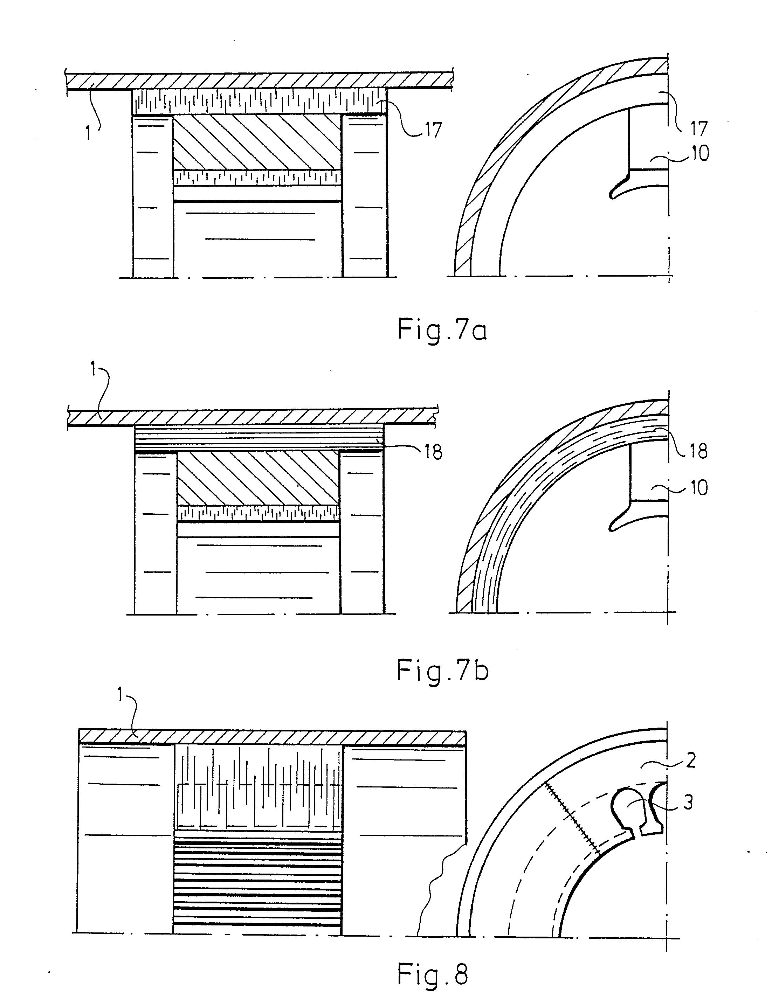

Das Polsystem eines Gleichstrommotors wird nur dann als Blechpaket angefertigt, wenn die Maschine dynamisch angetrieben wird und wenn im Falle z.B. eines Getriebes 4/4 das herkömmlich Eisenguß-System den raschen Flußänderungen nicht folgen könnte. In diesem Falle kann (nach Fig. 7a) der Polkranz 17 axialspiralig bzw. (nach Fig. 7b) radialspiralig gewickelt werden. Bisher werden diese aktiven Motorkörper aus geschnittenen Blechen mit einem Abfall von 50 -60% gefertigt.

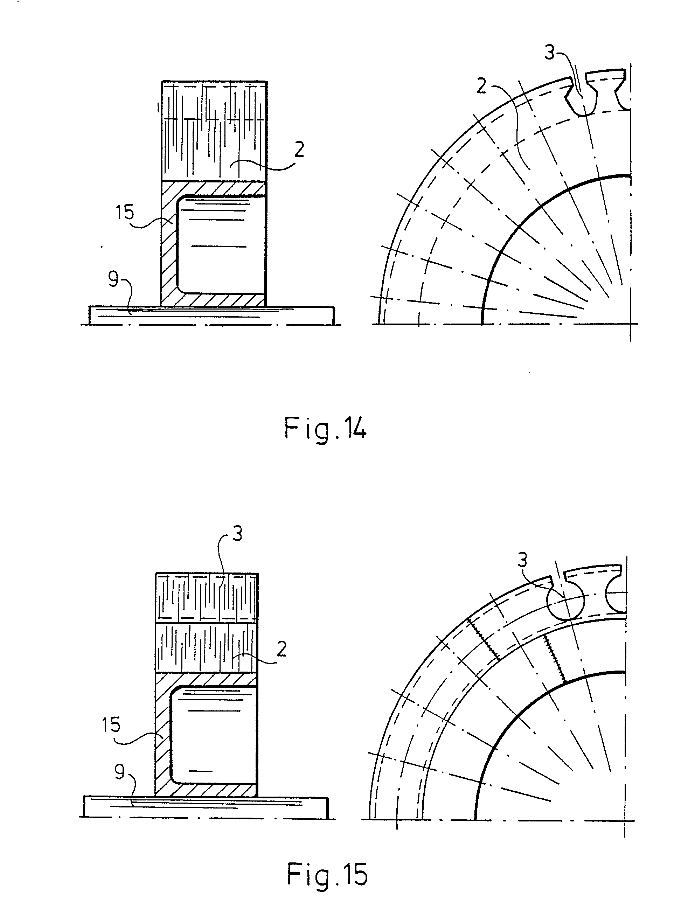

In der Fig. 8 ist ein Ausführungsbeispiel gezeigt, das von denen aus Fig. 5 oder 6 wesentlich abweicht. Der Eisenkörper des Ständers 2 des Motors bzw. sein Blechpaket wird axialspiralig innerhalb des Gehäuses 1 gewickelt. Wenn das Zahn-und Nutsystem in dem axialspiralig gewickelten Band von vorneherein hergestellt werden soll, soll die Technologie erweitert werden derart, daß die Nuten mit einer Schnellpresse vor dem Aufwickeln des Bandes hergestellt werden. Dadurch bildet sich ein Band, in dem das Zahn-und Nutsystem ausgebildet ist, das zur Befestigung der Wicklungen dient. Dieses Ausführungsbeispiel unterscheidet sich prägnant von der Lösung nach der US-A-4 365 180 dadurch, daß ein solches Band für Motoren mit einem inneren oder äußeren Läufer gleichermaßen verwendet werden kann. Erfindungsgemäß ist nämlich das Band in Höhe jeder Nut derart verschmälert, daß es dort den kleinsten Verformungswiderstand beim Hochkantwickeln bildet, so daß es sowohl so gewickelt werden kann, daß die Nuten nach innen weisen, wie auch so gewickelt werden kann, daß die Nuten außen liegen. In beiden Fällen ändern sich die Abmessungen der Nuten infolge der eintretenden Deformation des Bandes. Demgegenüber kommt es nach dem US-Patent, gemäß dem das Blechpaket aus nebeneinander liegenden, sandwichartig verlegten Ringscheiben gestaltet wird, für die Ausbildung eines Innenläufers oder Außenläufers darauf an, die Nuten von vornherein an der Außenseite oder Innenseite der Ringscheiben auszubilden, wobei die Abmessung der Nuten während des Herstellens des Blechpaketes konstant bleibt. Während Fig. 8 innenliegende Nuten zeigt, weisen die Nuten in den Ausführungsbeispielen nach Fig. 14,15 nach außen.

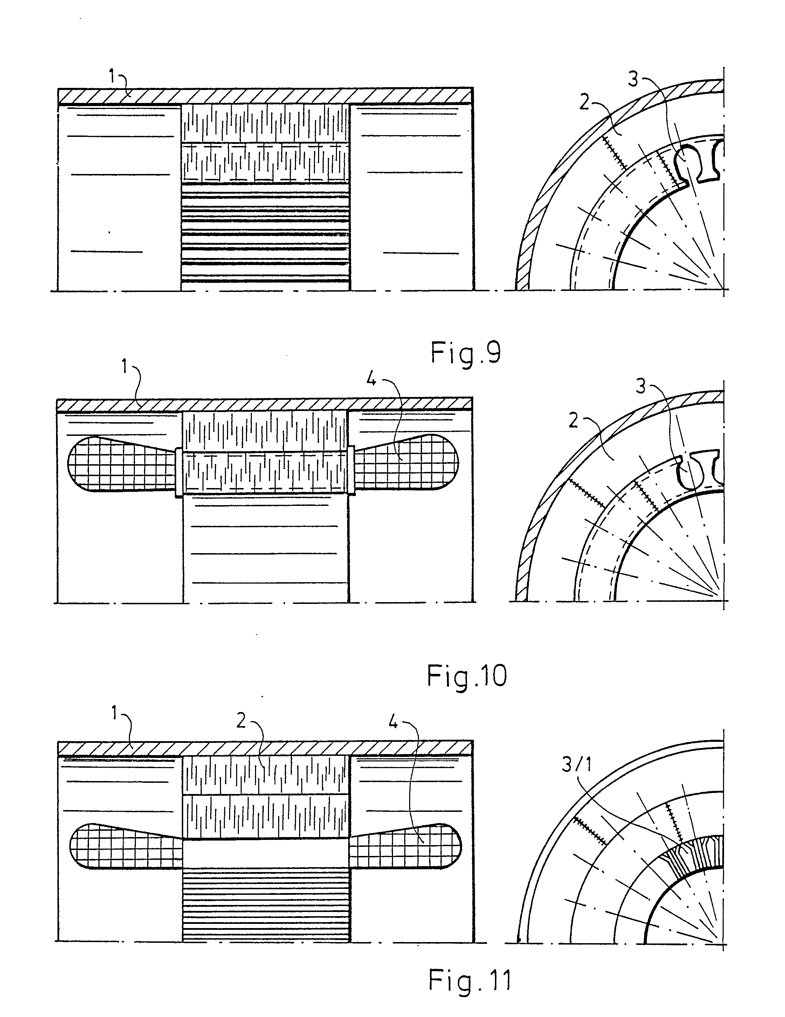

Beim Ausführungsbeispiel nach Fig. 9 wird derart verfahren, wie es anhand der Fig. 5b angegeben wurde. Hier wird der Eisenkörper des Ständers 2 axialspiralig über das das Zahn-und Nutsystem 3 des Ständers 2 bildende axialspiralig gewickelte Band aufgewickelt.

Insbesondere von großer Bedeutung ist es, wenn das innere Blechpaket entsprechend Fig. 10 axialspiralig so gewickelt wird, daß das Zahn-und Nutsystem 3 radial nach außen weist, und das Wicklungssystem 4 des Ständers 2 nach dem axialspiraligen Wickeln des fertigen Blechpaketes in dem in der ersten Schicht ausgebildeten Zahn-und Nutsystem 3 montiert wird.

Als Vorteil ergibt sich hierbei -sowohl bei einer mit Hand, als auch mit Hilfe von Maschinen vorgenommenen Wickelarbeit -ein außerordentlich wirtschaftlicher Schritt -im Vergleich zu dem herkömmlichen Wickeln des Ständers 2, weil die Wicklungen nicht an der Seite des Luftspalts eingelegt werden.

Bei dem Aufbau von größeren Maschinen (mit größerem Durchmesser) wird das Zahn-und Nutsystem 3 nach Fig. 11 hergestellt. Nach diesem Ausführungsbeispiel wird an dem in das Gehäuse 1 eingebauten, axialspiralig gewickelten Kern -(Körper) des Ständers 2, der gegebenfalls aus mehreren Schichten besteht, das vorgefertigte Blech des das Zahn-und Nutsystem bildenden in diesem Fall als Zahnkörper 3/1 bezeichneten Körpers durch Schweißen befestigt, und in die in dieser Weise ausgebildeten Nuten werden die Ständerwicklungen 4 eingebaut.

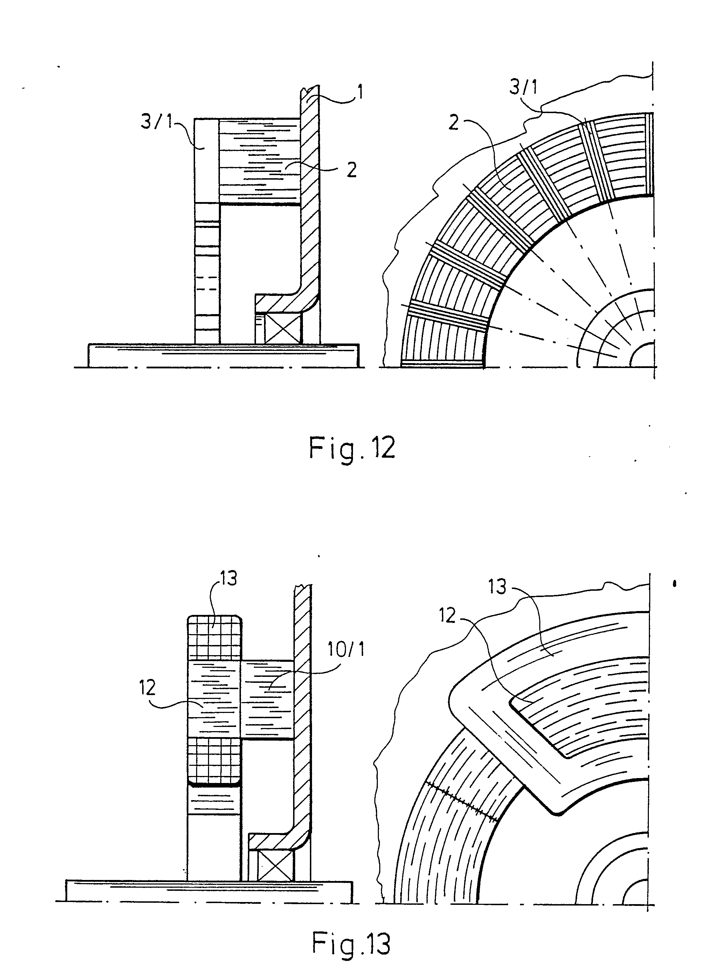

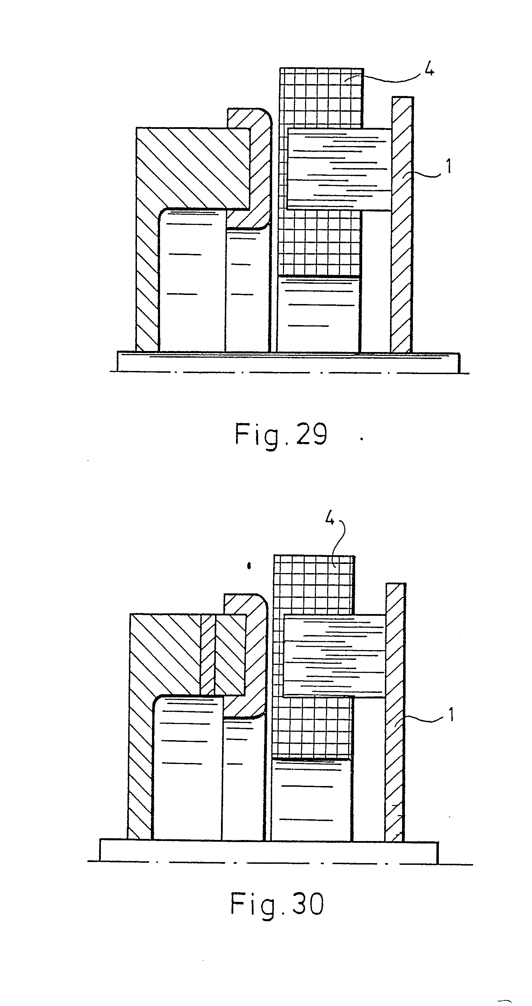

Für den Aufbau von Motoren mit einem Zwischenläufer ist ein Ausführungsbeispiel in Fig. 12 gezeigt. In diesem Falle werden an der Stirnseite des radialspiralig aufgewickelten Ständerkörpers 2 die vorgefertigten, in radialer Richtung verlaufender Zahnkörper 3/1 befestigt. Dieser nutenlose Eisenkörper ist außerdem derart gebaut, daß bei den Maschinen mit einem inneren Läufer die Bleche ausschließlich in der Richtung des magnetischen Hauptflusses liegen -im Gegensatz zu der aus dem US-Patent Nr. 4 392 073 erkennbaren Lösung, bei der die Bleche senkrecht zur Richtung des Hauptflusses ausgerichtet sind. Dieser wesentliche Unterschied ist bei der Maschine nach Fig. 29 -bei der Gestaltung des Körpers 2 und des Wicklungssystems 4 -noch klarer ersichtlich. Der Eisenverlust nach der US-Lösung ist wesentlich höher als er nach unserer Methode sein könnte.

In Fig. 13 ist ein weiteres Ausführungsbeispiel für den Ständer eines Motors mit Zwischenläufer gezeigt. Dieses Ausführungsbeispiel gilt ebenso für eine Gleichstrom-wie auch für eine Universalmaschine, an deren aus Blechen bestehenden Polkranz 10/1 die die Polwicklung 13 tragenden Polschuhe 12 z.B. durch Schweißen befestigt sind. - (Die Polschuhe 12 können aus einem Dauermagneten guter Qualität hergestellt werden.)

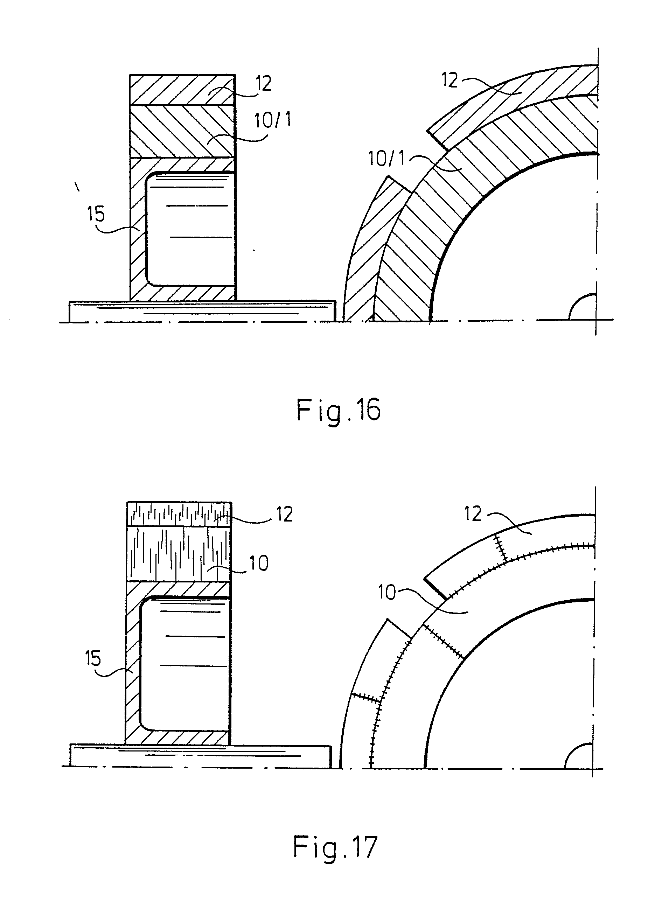

Weitere Ausführungsbeispiele für Motoren größeren Durchmessers oder mit einem äußeren Läufer sind in den Fig. 14, 15 gezeigt. Auf die Welle 9 ist die Nabe 15 gepreßt, auf der der Eisenkörper des Ständers 2 axialspiralig samt dem Zahn-und Nutsystem 3 aufgewickelt ist. In Fig. 16 sieht man den Ständer 2 eines Motors mit einem Außenläufer. Hier wird auf die Nabe 15 der Polkranz 10/1 aufgezogen und dann werden die Polschuhe 12 montiert (die ebenso aus Dauermagneten bestehen können). Der elektrische Motor nach Fig. 17 ist gleich dem in Fig. 16 mit dem Unterschied, daß der Polkranz 10 axialspiralig gewickelt und die Polschuhe 12 angeschweißt sind. Erfindungsgemäß wird der Läufer ebenso ohne Abfall gefertigt.

Die am meisten verbreitete Variante elektrischer rotierender Maschinen sind die ein-und dreiphasigen Asynchronmaschinen mit Kurzschlußläufer.

Die Läufer solcher Maschinen werden bei der Betriebsdrehzahl den durch die Schlupffrequenzströme erregten Ströme unterworfen, so daß der Eisenverlust vernachlässigbar ist.

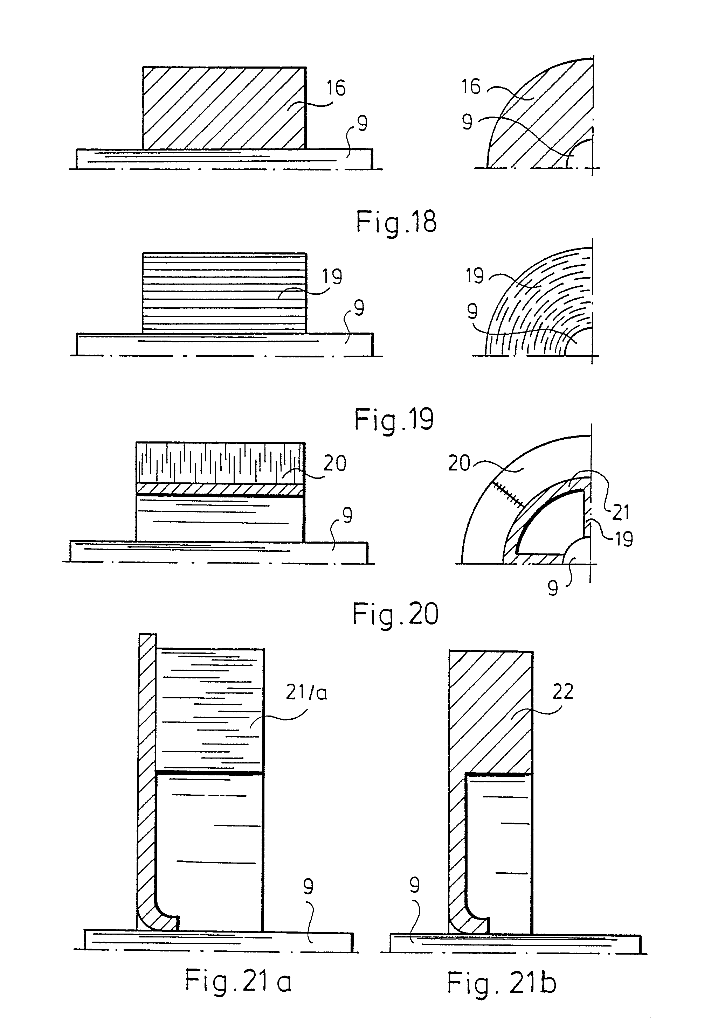

Darum kann der Eisenkern dieser Motoren ein massives Eisenrohr 16 sein (siehe Fig. 18). Der Läufer wird auf einer Welle 9 befestigt und ist ein kommerzielles dickwandiges Guß-oder kaltgezogenes Rohr.

In Fig. 19 ist ein in zwei Schichten aufgebauter Läufer gezeigt, der aus einem radialspiralig gewickelten Dynamoblechpaket 19 hergestellt ist. Ob ein Ausführungsbeispiel nach Fig. 18 oder nach Fig. 19 gewählt wird, kann durch Wirtschaftlichkeitserwägungen entschieden werden.

Ein insbesondere beachtenswertes Ausführungsbeispiel ist in Fig. 20 gezeigt. Entsprechend dieses Ausführungsbeispiels kann der Eisenkörper 20 des Läufers von Gleichstrom-, Universal-und Kommutationsmotoren bzw. für Wechselstrom-Asynchronmotoren mit Schleifring aufgebaut werden. Hierbei wird das den Eisenkörper des Läufers bildende Blechpaket auf dem Kranz 21 der an der Welle 9 z.B. durch Schweißen befestigten Rippen 19 axialspiralig aufgewickelt.

Beim Aufbau der Motoren mit Zwischenläufer wird entsprechend den Fig. 21a und 21b verfahren. Der Läufer nach Fig. 21a besteht aus einem radialspiralig gewickelten Blechpaket, während aus Fig. 21b ein Läufer 22 aus massivem Eisen ersichtlich ist.

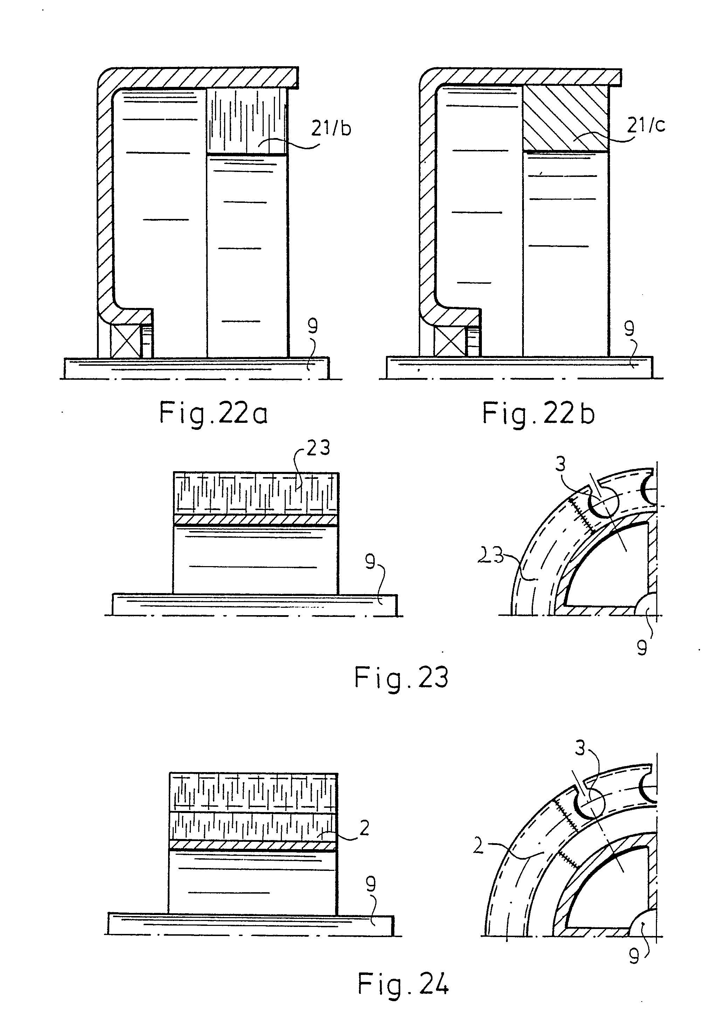

Zum Aufbau von Motoren mit einem Außenläufer ist ein Ausführungsbeispiel aus Fig. 22 ersichtlich. Diese Lösung kann anstelle des Läuferkranzes nach Fig. 9 oder als zweite Schicht verwendet werden. Der Läufer ist aus einem axialspiralig gewickelten Blechpaket 21b oder aus massivem Eisen 21c ausgebildet. (Die Wicklungen werden in diesem Fall durch die Fliehkraft gegen das Blechpaket gepreßt.) In Fig. 23 und 24 sind elektrische Motoren mit Läufern größeren Durchmessers, die aus zwei Schichten aufgebaut sind, schematisch gezeigt. Hier wird der Läufer -infolge der Kernabmessung -aus zwei Schichten axialspiralig gewickeltem Eisenband 23 gefertigt.

Es sei hier bemerkt, daß eine sog. "Hochkantschichtung" der Bleche des Eisenkörpers der Läufer und der Ständer, bei der das Eisenband im voraus verzahnt wird, an und für sich schon lange bekannt ist. Wenn aber das Zahn-und das Blechpaket dann zusammengestellt wird, kann von einer abfalllosen Bauart nicht die Rede sein.

Wenn der Ständer 2 nicht durch Zusammenpressen der Bleche, sondern mit Hilfe anderer Technologien gebaut wird, so wird der Läufer -wenn möglich -aus massivem Eisen gebaut. Fertigt man aber den Läufer und den Ständer aus axialoder radialspiralig gewickeltem Band, so muß man für die Befestigung der Wicklungen Sorge tragen, da das Zahn-und Nutsystem -die die Wicklungen einschließen -nicht ausgebildet werden. Erfindungsgemäß, d.h. bei dem Aufbau eines Motors ohne Abfall, wird eine sog. montierte Wicklungsbefestigung erfordlich.

Ein Teil dieser Technologien folgt analog der Ausbildung des herkömmlichen Zahn-und Nutsystem. Somit sind diese in ihrer Funktion herkömmlich, in ihrer Ausbildung aber neu; andererseits werden Lösungen empfohlen, die durch Abwesenheit des Eisens (der Zähne) entlang des Luftspalts gekennzeichnet werden können.

Die Befestigungen der Wicklungen werden an einigen Ausführungsbeispielen veranschaulicht.

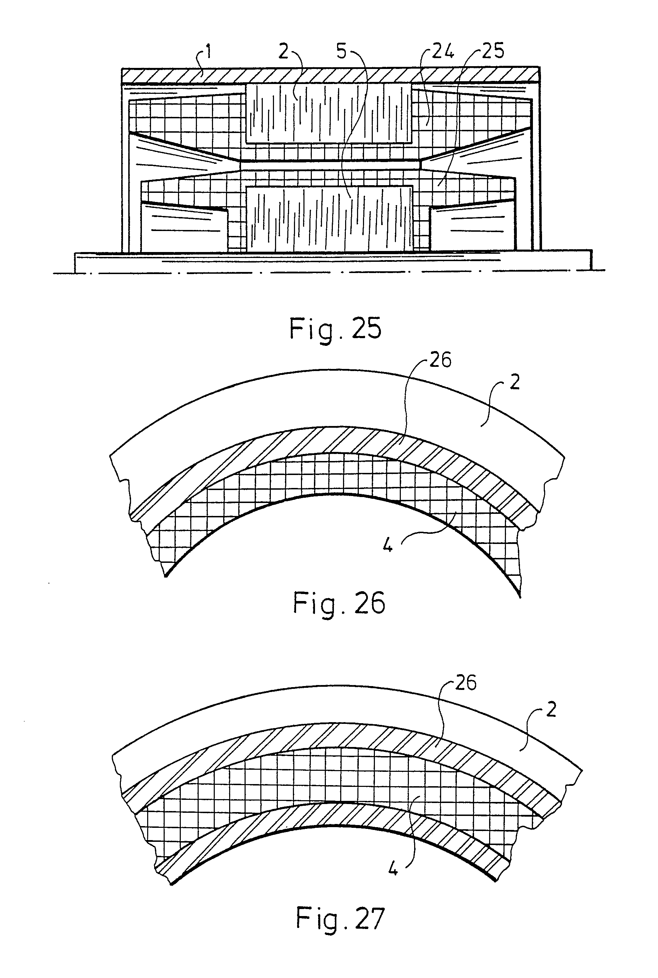

Aus Fig. 25 ist ein Asynchronmotor mit einem Innenläufer und mit Schleifring im Schnitt ersichtlich. Der Eisenkörper (das Blechpaket) des Ständers 2 ist axialspiralig gewickelt und in das Gehäuse 1 eingepreßt. Der Läufer 5 wird herkömmlich, jedoch ohne Nuten, hergestellt.

Die aktiven Flächen der Wicklungen 4 und 7 des Ständers 2 und des Läufers weisen ein in Kunstharz 24, 25 eingebettetes Wicklungssystem mit ausgegossenen Wicklungsköpfen auf. Das Wesen dieser Lösung besteht darin, daß die aus Wicklungsdrähten gefertigten Wicklungselemente in einer Schablone mit Kunstharz ausgegossen werden, so daß sich der zur Aufnahme des Ständerkörpers dienende Spulenkörper ausbildet.

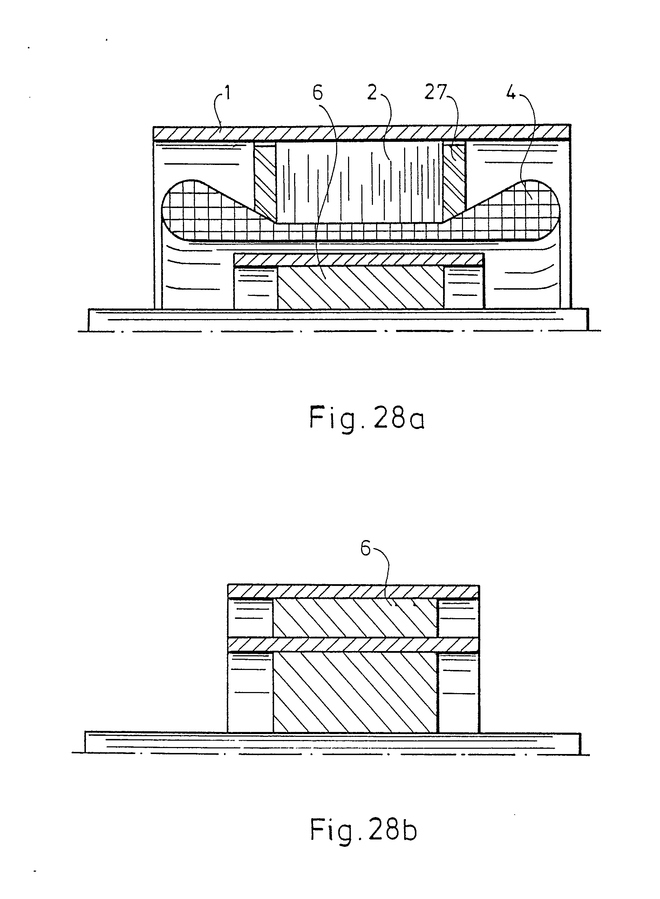

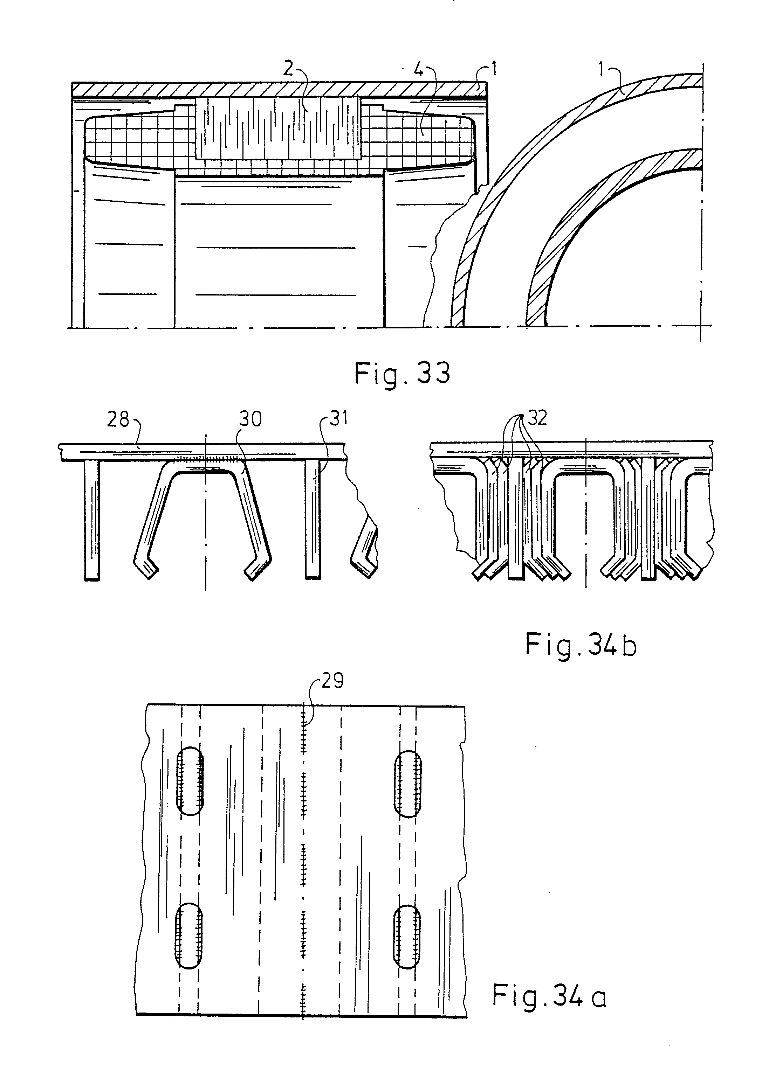

Das Wicklungssystem des Läufers wird entlang der Läuferfläche als ein selbständiges Wicklungssystem ausgebildet; man muß daher für die Befestigung der Wicklung sorgen. Zwecks Verminderung des magnetischen Flusses zum Minimum sollen die Luftspalte möglichst kleinste Abmessungen haben. Dieses Ausführungsbeispiel kann von der Konstruktion her derjenigen nach der DE-A-2 217 824 gegenübergestellt werden. Erfindungsgemäß wird der axialspiralig gewickelte Ständerkörper nachträglich in das Empfangselement eingearbeitet. (Siehe hierzu: Fig. 28 und 34)

Beim Ausführungsbeispiel nach den Fig. 26 und 27 kann die Ständerwicklung 4 aus mit thermoplastischem Material umhülltem Draht hergestellt werden. In diesem Fall wird an die innere Fläche des Ständers 2 eine Kunstharzschicht 26 in einer Dicke von einigen Zehntelmillimetern aufgetragen und dann wird die Wicklung entlang des Luftspalts durch Aufwärmung befestigt bzw. von einem Kranz zusammengeklemmt.

In den Fig. 28a und 28b ist ebenfalls schematisch ein kurzgeschlossener Asynchronmotor im Schnitt gezeigt. Die Ständerwicklung 4 ist dadurch gekennzeichnet, daß der Wickelkopf frei herausragt, wobei der Befestigungsring 27 mit Kunstharz ausgegossen ist. Dadurch ist er an dem Gehäuse 1 befestigt. Bei dieser Konstruktion kann die Kühlung des Wickelkopfes intensiv sein. Die in Kunstharz eingebettete Ständerwicklung 4 eines kurzgeschlossenen Asynchronmotors kann auch derart ausgebildet werden, daß die in Kunstharz eingebettete Wicklung in voraus hergestellt wird und den radialspiralig gewickelten Eisenkörper unschließt. (Siehe: Fig. 29) In Fig. 30 ist dieselbe Konstruktion gezeigt, aber mit einem zweikäfigen Läufer.

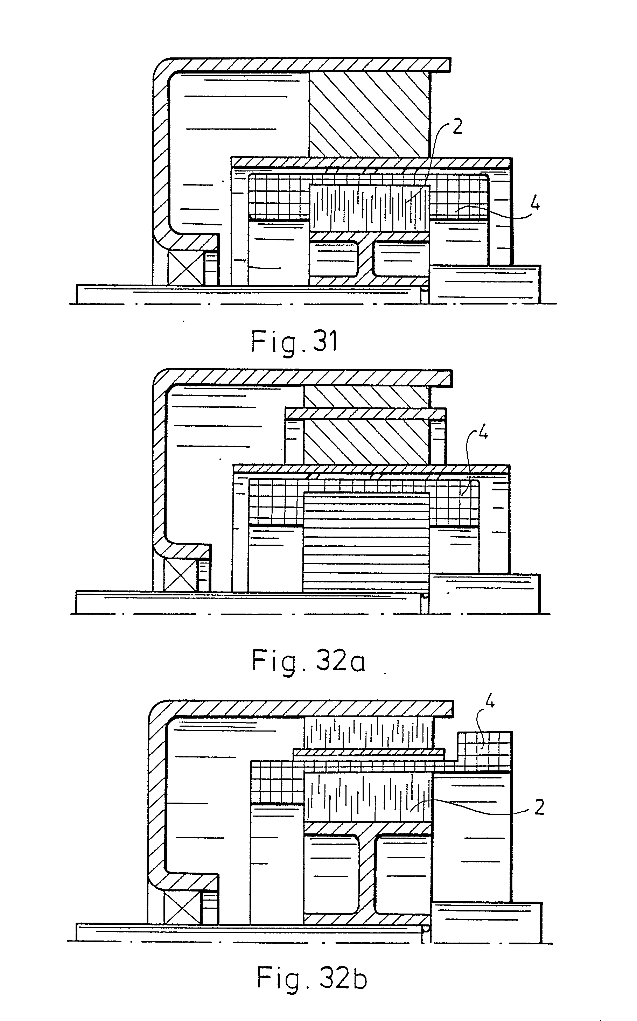

Die Wicklung eines kurzgeschlossen Asynchronmotors mit einem Außenläufer ist aus Fig. 31 mit einem Käfig und aus Fig. 32a mit zwei Käfigen ersichtlich.

Eine Wicklungsausbildung nach Fig. 32b kann durch die Mehrzweck-Anwendung eines Motors mit Außenläufer begründet sein. Durch diese Ausführungsform ist nämlich die Montagearbeit erleichtert.

Die Wicklungsköpfe der Ständerwicklung 4 sind an deren linken und an deren rechten Seite asymmetrisch angeordnet, so daß der axialspiralig gewickelte Eisenkörper 2 in die in dem Kunstharz befestigte Ständerwicklung 4 einmontiert werden kann. Weitere Wicklungsanordnungen und ihre Befestigungen sie aus den Fig. 33 -39 ersichtlich.

Entsprechend dieser Ausführungsbeispiele können die Zahn-und Nutsysteme für die Ständerwicklungen eines Motors mit Innen-oder Außenläufer sowie die Läuferwicklung eines Motors mit Außenläufer projektiert werden.

Nach Fig. 34 ist das Eisenband 28 so breit, wie die aktive Länge des Ständerblechpaketes des Motors sein soll. Darauf wird eine elastische, im Querschnitt etwa U-förmige Nuthülse 30 mit schräg auseinanderlaufenden Schenkeln mittels einer Schweißnaht 29 -entlang einer Nutlänge -befestigt bzw. es werden in der Mitte zwischen benachbarten Nuthülsen 30 die Hauptzähne 31 angeordnet und befestigt. Die Hauptzähne 31 werden ebenfalls angeschweißt. Das auf diese Weise vorbereitete, mit Zähnen und Nuten versehene Band wird durch die krummen Nebenzähne 32 ergänzt, so daß das Zahnsystem entsteht.

Von den elastischen Schenkeln der Nuthülsen 30 werden die paarweise beidseitig der Hauptzähne 31 angeordneten gebogenen Nebenzähne 32 gegen die Hauptzähne 31 geklemmt, so daß ein zur Aufnahme der Wicklung fertiges Nut-und Zahnsystem entsteht.

In Fig. 34a ist ein offenes (vor der Montage stehendes), und in Fig. 34b ein geschlossenes - (montiertes) Zahn-und Nutsystem gezeigt.

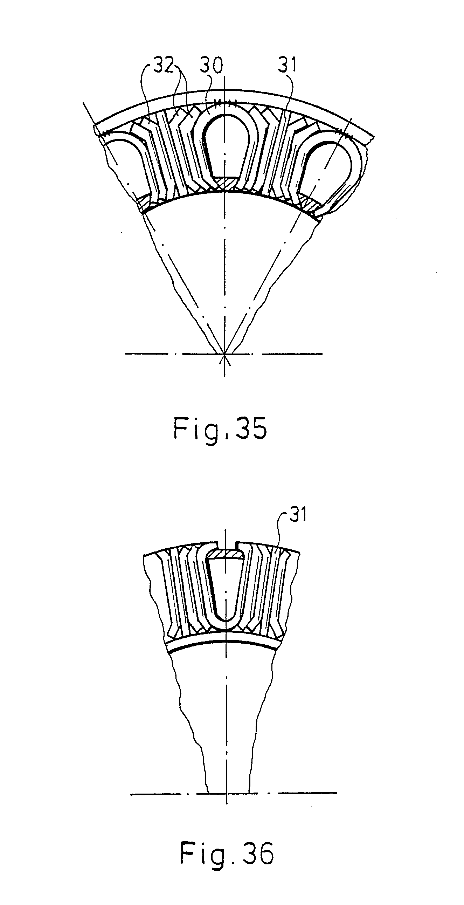

Das Zahn-und Wicklungssystem für den Ständer eines erfindungsgemäßen Motors (mit einem Innenläufer) oder das Zahn-und Wicklungssystem für einen Außenläufer sind aus den Ausführungsbeispielen nach Fig. 35 ersichtlich.

Durch die richtige Auswahl der Abmessungen der einzelnen Konstruktionselemente bei der Anpassung nimmt das ganze System die endgültige Form und Abmessung an.

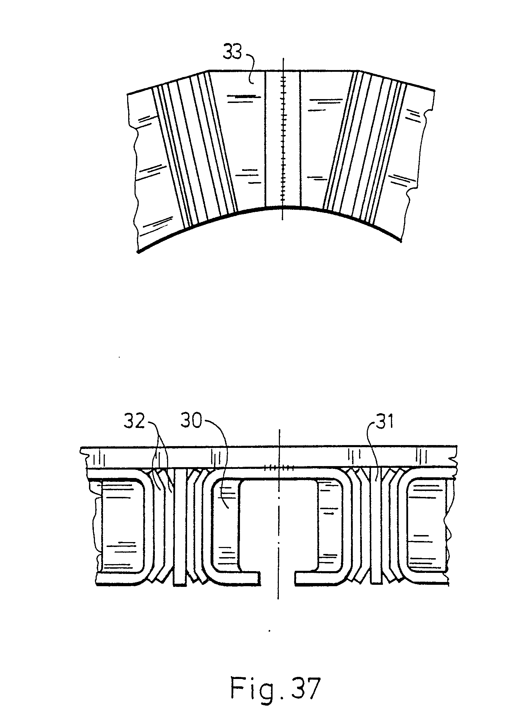

Aus Fig. 36 ist ein Ausführungsbeispiel für die Wicklung des Läufers einer rotierenden elektrischen Maschine mit einem Innenläufer bzw. für einen Außenläufer gezeigt, wobei die Wicklung luftspaltseitig geschlossen ist.

Zur Gestaltung der Ständerwicklung von Motoren mit einem Zwischenläufer ist das Ausführungsbeispiel nach Fig. 37 geeignet. Nach dieser Konstruktion ist die elastische Nuthülse 30 konisch (weil das Wickelsystem in einer Radialebene liegt), d.h. ihre Breite nimmt gegen den äußeren Durchmesser hin zu, damit die die Zahnpakete bildenden Bleche parallel zueinander angeordnet werden können.

In Fig. 37 sieht man in zwei Schichten ein Zahn-und Nutsystem in halbmontiertem und im fertigmontierten Zustand. Die Hauptzähne 31 und die elastische Nuthülsen 30 werden in radialer Richtung -um eine Nutteilung versetzt -auf der Scheibe 33 durch Nahtschweißen befestigt und ebenso an der Stirnfläche des radialspiralig vorgefertigten Blechpaketes befestigt. Danach werden die Hilfszähne 32 zwischen die elastischen Hülsen 30 und die Hauptzähne 31 eingebracht. Endlich wird das ganze System z.B. mit Kunstharz oder mit einem isolierenden Lack verfestigt.

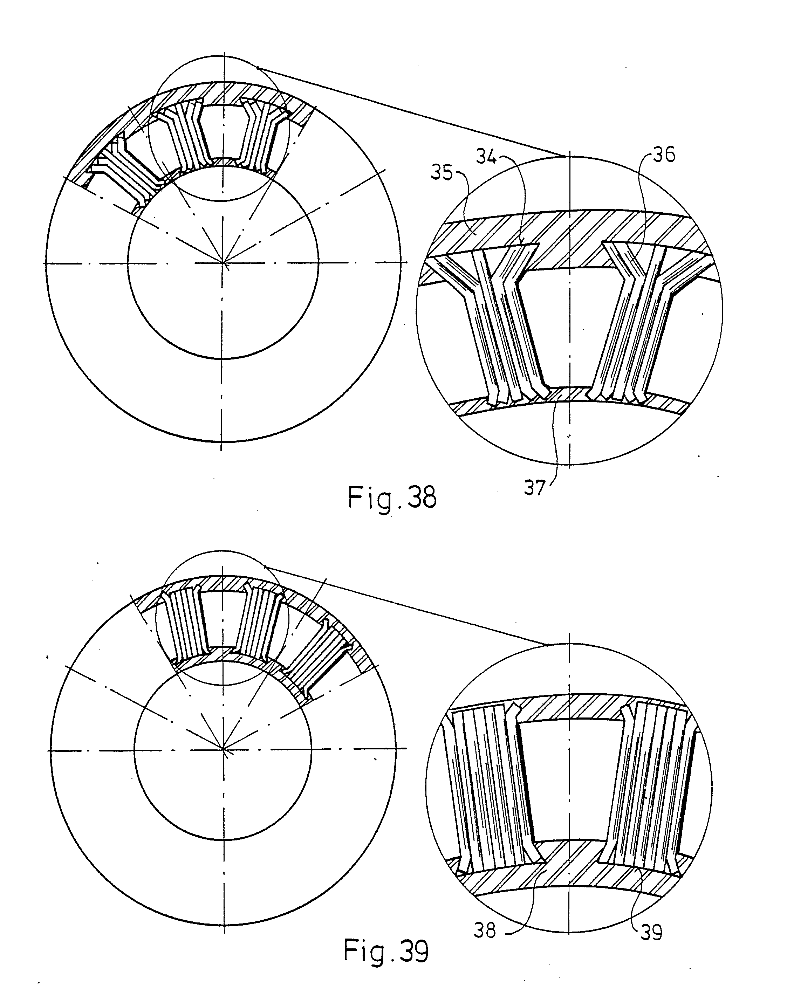

Eine andere Anwendung des vorher vorgestellten Zahnsystems ist in Fig. 38 veranschaulicht. Dies gilt entsprechend auch für einen Innenläufer.

Es wird zuerst ein die Zähne haltendes Rohr 35 aus Kunstharz oder Ferrit vorgefertigt, an dessen inneren Fläche axiale schwalbenschwanzförmige Nuten 34 ausgearbeitet sind. Dieses Rohr wird in den Eisenkörper des Motors eingeschoben. Nach der Befestigung des Rohres werden in die Nuten 34 die vorgefertigten Zähne 36 eingeschoben und eventuell durch Kleben befestigt. Danach weren die Wicklungen eingelegt und mit Kunstharz 37 überzogen. Es ist vorteilhaft, wenn oberhalb bzw. unterhalb der Zähne 36 die Kunstharzschicht schmal ist. Eine ideale Lösung wird erreicht, wenn das Rohr 35 oder die Scheibe 33 aus einem Material guter magnetischer Eigenschaften hergestellt wird.

Das Ausführungsbeispiel nach Fig. 39 gilt dann, wenn oberhalb des Luftspalts ein geschlossenes Zahn-und Nutsystem ausgebildet werden soll. Aus der Fig. sind klar die Sperrschicht 38 und die Nuten 39 umgekehrter Lage ersichtlich.

Aus den Fig. 40a, 40b, 40c sind Ausführungsbeispiele ersichtlich, bei denen der Läufer eines kurzgeschlossenen Asynchronmotors nicht aus Blechen hergestellt ist, der Käfig aber einfach ausgebildet sein soll. Herkömmlich wird diese Aufgabe dadurch gelöst, daß in die vorgefertigten Nuten Metallstangen eingeschoben werden bzw. bei kleinen Motoren ein Alu-Spritzguß verwendet wird.

Nach Fig. 40a ist der an der Welle 9 montierte Läufer 6 mit einem einfachen Rohrkäfig 40 versehen, an dem durch Längsschlitze die die Stangen darstellenden Stege 41 und die Kurzschlußringe 42 ausgebildet sind.

In Fig. 40b ist ein Rohrkäfig mit axialen Längsschlitzen, in Fig. 40c ein Rohrkäfig mit schrägen Längsschlitzen gezeigt. Diese Varianten können als Rohrkäfige für Motoren mit innerem oder mit äußeren Läufer verwendet werden.

In den Fig. 41a und 41b sind zwei Rotorkäfige für einen Motor mit Zwischenläufer veranschaulicht. Nach Fig. 41a verlaufen die Schlitze 43 am Läuferkäfig in radialer Richtung und nach Fig. 41b verlaufen die Schlitze 44 schräg zur Radialen.

## Ansprüche

1. Elektrische rotierende Maschine (Motor), deren Ständer und Läufer (Innen-, Außen-oder Zwischenläufer) ohne Abfall hergestellt sind, dadurch gekennzeichnet, daß der Eisenkern (Körper) des Ständers (2) und des Läufers (5) aus axialspiralig oder radialspiralig gewickeltem Eisenband oder aus massivem Eisen zahn-und nutenfrei ausgebildet sind.

2. Elektrischer Maschine nach Anspruch 1, dadurch gekennzeichnet, daß das Wickelsystem der Maschine in ein gegen den Luftspalt offenes oder geschlossenes Zahn-und Nutsystem eingebettet ist, wobei das letztere aus an einem Eisenband (28) oder an einer Scheibe befestigten elastischen Nuthülsen (30) und Hauptzähnen (31) sowie aus dazwischengeschobenen Hilfszähnen (32) besteht.

3. Elektrische Maschine (Motor) nach Anspruch 1, dadurch gekennzeichnet, daß das Wicklungssystem auf einem vorgefertigten, aus Kunstharz oder Ferrit bestehenden Rohr (35) bzw. auf einer Scheibe befestigt wird, derart, daß an der Fläche derselben in axialer oder radialer Richrung schwalbenschwanzförmige Nuten (34) ausgearbeitet sind, in die Zähne (36) beliebiger Form und beliebigen Materials eingeschoben sind und daß die in diesem Zahn-und Nutsystem eingebettete Wicklung mittels einer Sperrschicht (37) aus Kunstharz befestigt ist.

4. Elektrische Maschine nach einem der Ansprüche 1 bis 3, dadurch gekennzeichnet, daß ihre Wicklungen in eine entlang des Luftspalts gleichmäßig ausgegossene Kunstharzschicht eingebettet sind, die die vorstehenden Eisenteile vollständig abdeckt.

5. Elektrische Maschine nach Anspruch 1, dadurch gekennzeichnet daß ihre Wicklung je einen in Kunstharz eingebetteten geschlossenen oder freistehenden Wicklungskopf und einen mit Kunstharz ausgegossenen Befestigungsring (27) aufweist.

6. Elektrische Maschine (Motor) nach Anspruch 1, dadurch gekennzeichnet, daß ihre Wicklungen aus einer entlang des Luftspalts in gleichmäßiger Schicht aufgetragenen, die Eisenteile vollständig abdeckenden ausgegossenen Kunstharzschicht -(26) und aus einer mit thermoplastischem Kunststoff umhüllten Drähten gefertigten, mit Kunstharz vergossenen Wicklung bestehen, wobei der Wicklungskopf geschlossen oder freistehend ist, während im letzteren Fall der Befestigungsring - (27) mit Kunstharz ausgegossen ist.

7. Elektrische Maschine (Motor), deren Ständer und Läufer aus axialspiralig oder radialspiralig gewickeltem Eisenband bzw. aus massivem Eisen, zahn-und nutenfrei ohne Abfall hergestellt sind, dadurch gekennzeichnet, daß ihre Käfigwicklungen aus einem geschlitzten Metallrohr oder einer Scheibe bestehen, wobei die Rohrkäfige und Kurzschlußringe ein Wicklungssystem bilden, und die Schlitze (43, 44) des Käfigs in axialer oder radialer Richtung oder in einer dazu schrägen Richtung ausgebildet sind.

Fig.1.a

Fig.1.b

Fig.2

Fig. 3

Fig. 4

Fig. 5a

Fig. 5b

Fig. 6a

Fig. 6b

1

17

17

10

Fig.7a

1

18

18

10

Fig.7b

1

2

3

Fig.8

Fig.9

Fig.10

Fig.11

Fig.12

Fig.13

Fig.14

Fig.15

Fig.16

Fig.17

Fig.18

Fig.19

Fig.20

Fig.21 a

Fig. 21b

21/b

9

**Fig. 22a**

21/c

9

**Fig. 22b**

23

9

23

3

9

**Fig. 23**

2

9

3

2

9

**Fig. 24**

Fig. 25

Fig. 26

Fig. 27

Fig. 28a

Fig. 28b

Fig. 29

Fig. 30

Fig. 31

Fig. 32a

Fig. 32b

Fig. 33

Fig. 34b

Fig. 34 a

Fig.35

Fig.36

Fig. 37

Fig.38

Fig.39

Fig. 40 a

Fig. 40 b

Fig. 40 c

Fig.41a

Fig.41b